# DEMANDE DE BREVET EUROPEEN

(11) **EP 1 793 132 A1**
(43) Date de publication de la demande: **06.06.2007**
(21) Numéro de dépôt: 06291818.0
(22) Date de dépôt: 24.11.2006
(51) Int. Cl.: F16B 37/00, F16B 39/36, F16B 33/00

(54) **Bague pour empêcher la rotation d'une vis d'assemblage sur une pièce support**

(30) Priorité: 01.12.2005 FR 0512204
(71) Demandeur: Hellermanntyton, 78190 Trappes (FR)
(72) Inventeur: Rodriguez, Manuel, 94100 Saint-Maur-Des-Fosses (FR); Cherdo, Pascal, 78650 Beynes (FR)
(74) Mandataire: Doressamy, Clarisse

(57) **Abrégé**

L'invention concerne une bague (1) destinée à empêcher la rotation d'une vis assemblée dans un trou d'une pièce support, comportant au moins une partie cylindrique avant (23) favorisant le centrage de la bague (1) dans le trou de la pièce support, et au moins une partie tronconique arrière (25) adjacente à la partie cylindrique avant (23), ladite deuxième partie (25) étant en matière semi-rigide déformable et de diamètre d'alésage équivalent au jeu près à celui du filetage de la vis et en continuité de l'alésage de la partie cylindrique avant (23), ladite deuxième partie (25) étant de diamètre externe croissant, respectivement de celui ou proche de la partie cylindrique avant (23), du côté de celle-ci, à un diamètre à l'extrémité arrière égal sensiblement au plus au diamètre du trou de la pièce support, à sa position assemblée, plus la hauteur du filet de la vis plus le jeu fonctionnel d'assemblage, au moins ladite seconde partie tronconique (25) étant pourvue sur son alésage interne de nervures (17) ou godrons destinés à venir s'écraser sur le filet de la vis au serrage de cette dernière sur sa pièce support.

## Description

L'invention concerne une bague pour empêcher la rotation d'une vis d'assemblage sur une pièce support.

On sait que la pose et l'assemblage d'une vis sur une pièce support nécessitent en général que la tête de la vis soit maintenue au moyen d'un outil pour empêcher qu'elle ne tourne lors du serrage de l'écrou correspondant dans le trou de la pièce support à laquelle elle est assemblée. Cette manoeuvre outre qu'elle exige de l'opérateur une attention particulière pour simultanément maintenir la tête de la vis et tourner l'écrou, est quelquefois difficile à réaliser lorsque la tête de la vis est peu accessible.

Par ailleurs, l'étanchéité entre le trou de la pièce support et la vis n'est pas réalisée.

L'invention vise à pallier ces inconvénients et propose une bague destinée à empêcher la rotation d'une vis assemblée dans un trou d'une pièce support, caractérisée en ce qu'elle comporte au moins une première partie cylindrique avant de diamètre d'alésage équivalent au jeu près à celui du filetage de la vis et de diamètre externe équivalent ou légèrement supérieur au jeu près à celui du trou de la pièce support, favorisant le centrage de la bague dans le trou de la pièce support, et au moins une seconde partie tronconique arrière adjacente à la partie cylindrique avant, en matière semi-rigide déformable, de diamètre d'alésage équivalent au jeu près à celui du filetage de la vis, en continuité de l'alésage de la partie cylindrique avant, et de diamètre externe croissant, respectivement de celui ou proche de la partie cylindrique avant, du côté de celle-ci, à un diamètre à l'extrémité arrière égal sensiblement au plus au diamètre du trou de la pièce support, à sa position assemblée, plus la hauteur du filet de la vis plus le jeu fonctionnel d'assemblage, au moins ladite seconde partie tronconique étant pourvue sur son alésage interne de nervures ou godrons destinés à venir s'écraser sur le filet de la vis au serrage de cette dernière sur la pièce support.

Il résulte de cette disposition que, grâce à la matière semi-rigide déformable de la partie tronconique arrière guidée par la partie cylindrique avant dans le trou de la pièce support et à la conformation rainurée de l'alésage interne de cette partie tronconique, la surface externe de cette dernière s'applique en pression et de façon adhérente dans l'alésage du trou de la pièce support à un couple supérieur au couple de serrage de la vis et que les nervures de sa partie d'alésage s'écrasent sur le filetage de la vis, sans s'y bloquer ni s'arracher, mais sautent d'un filet à l'autre lors du serrage de la vis sur la pièce support. De plus, la matière semi-rigide déformable de la bague épouse le trou de la pièce support de façon étanche, conférant ainsi l'étanchéité de l'assemblage de la vis sur sa pièce support.

Ladite bague est avantageusement formée en une seule pièce issue généralement de moulage en matière plastique déformable ou alliage de métal déformable ou plus généralement toute pièce issue de la transformation de polymères déformables. Tout autre matériau compatible connu de l'homme du métier peut aussi être envisagé dans le cadre de l'invention. De plus, lesdites nervures sont formées de préférence sur la totalité de l'alésage de la bague.

Les nervures de l'alésage interne de la bague sont avantageusement formées de façon régulière sur la périphérie de l'alésage, parallèlement à l'axe de symétrie de rotation de la bague et chacune de leurs crêtes ou partie en saillie est arrondie, selon une portion de cercle, identique l'une à l'autre ou non depuis les parties en fond de crête ou en creux.

Lesdites parties en creux des nervures peuvent avoir la forme d'un léger plat, de préférence régulier inscrit dans un cercle coaxial à la bague. De même, les crêtes des nervures sont avantageusement inscrites dans un même cercle coaxial à la bague, différent du cercle précédent.

La longueur de la partie cylindrique avant peut être variable et de même la longueur de la partie tronconique, mais de préférence la partie cylindrique avant s'étend sensiblement au tiers environ de la profondeur de la bague et la partie tronconique s'étend sur les deux tiers environ restants.

L'extrémité avant de la partie cylindrique avant peut être chanfreinée, ce qui favorise le guidage du centrage de la bague au serrage de la vis dans le trou de la pièce support, notamment un trou à poinçonnage d'entrée de l'ouverture.

En outre, le profil externe de section de la partie tronconique peut être variable, de concave à convexe, mais de préférence il est conique.

Naturellement, l'invention concerne également l'assemblage d'une pièce support et d'une vis dans un trou complémentaire d'une pièce support au jeu près, utilisant une bague selon l'invention.

L'invention est illustrée ci-après à l'aide d'un exemple de réalisation et en référence aux dessins annexés, sur lesquels :
- la figure 1 est une vue en perspective d'une bague conforme à l'invention,
- la figure 2 est une vue en coupe axiale de la bague selon la figure 1, avec une partie d'une vis,
- la figure 3 montre une bague selon l'invention montée sur une vis, elle-même montée dans un trou complémentaire d'une pièce support, avant assemblage de la pièce support, et
- la figure 4 est une vue en coupe de la pièce support assemblée.

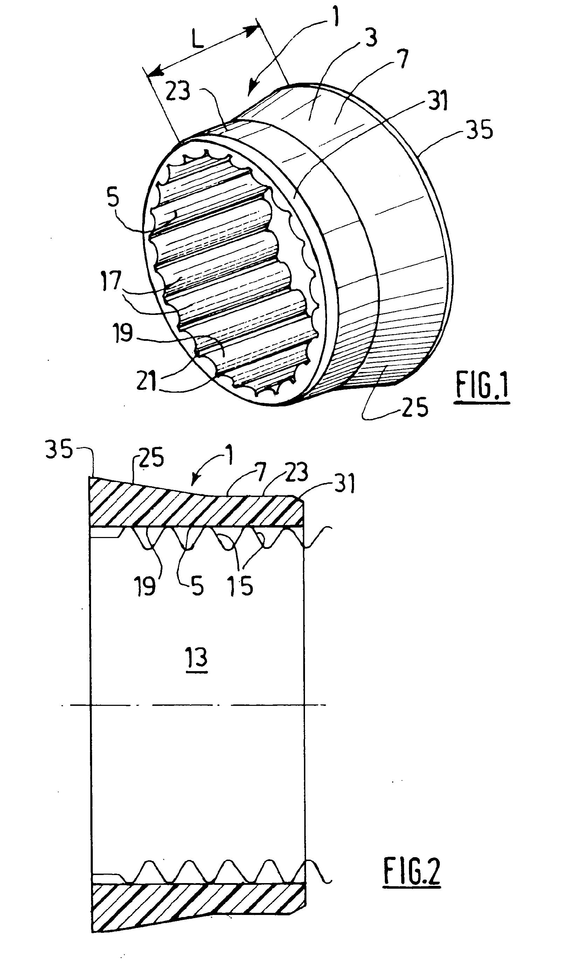

Avec référence aux dessins et aux figures 1 et 2 en particulier, une bague 1 selon l'invention, formée en une seule pièce en matière semi-rigide déformable, matière plastique par exemple, comporte essentiellement un corps 3 de conformation générale cylindrique pourvue d'un alésage interne 5 et d'une surface externe 7. La bague 1 comporte un axe de symétrie axial.

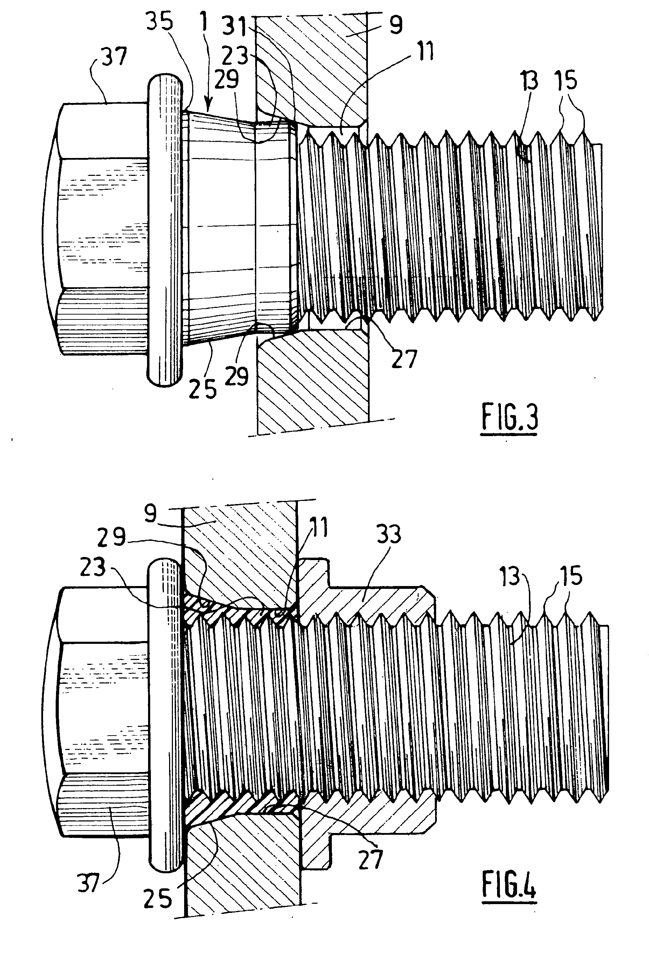

La longueur de section ou profondeur L de cette bague 1 est relativement faible, variable selon la pièce support 9 à assembler (cf figures 1 et 3) et selon le trou 11 qui reçoit la vis 13 sur laquelle la bague 1 est montée. Cette profondeur L peut être au plus celle du trou 11 de la pièce support 9 ou être réduite à la longueur de plusieurs filets 15 de la vis, au moins deux à trois selon le diamètre de la vis 13.

L'alésage de la bague 1 reçoit à faible jeu la vis d'assemblage 13. Cet alésage 5 est cylindrique à symétrie axiale et sa surface est nervurée longitudinalement (parallèlement à l'axe) de façon régulière sur la périphérie par des nervures 17.

Les nervures 17 comportent chacune une partie en saillie ou de crête 19 à forme de portion de cercle et deux parties en creux 21 de part et d'autre et au fond de la crête 19. Ces parties en creux 21 sont à forme de plat, identiques l'un à l'autre. Les parties de crête 19 et les parties en creux 21 sont inscrites respectivement dans deux cercles coaxiaux à l'axe de la bague (non représentés).

La vis d'assemblage 13 est donc reçue dans la bague 1 par le sommet des crêtes 19 et à faible jeu fonctionnel, de 0,1 à 0,3 mm par exemple selon l'assemblage.

La surface externe 7 de la bague est destinée à être reçue par le trou 11 de la pièce support d'assemblage 9 (cf figures 3 et 4). Elle comporte essentiellement avec symétrie axiale une partie cylindrique avant 23, dite de centrage, et une partie tronconique arrière 25 adjacente et coaxiale à la partie cylindrique avant 23.

La partie cylindrique avant 23 s'étend sensiblement sur le tiers de la profondeur de la bague 13, mais peut avoir une longueur variable ainsi que précité. Elle est de faible épaisseur et son diamètre externe est légèrement supérieur au diamètre de la partie cylindrique la plus étroite 27 du trou 11 de réception de la pièce support 9, ce trou 11 comportant dans l'exemple un alésage pourvu d'une ouverture de poinçonnage évasée arrière 29.

L'extrémité avant de la bague 1 est chanfreinée en 31 pour favoriser le guidage centré de la bague 1 dans le trou 11 au serrage de la vis par l'écrou correspondant 33.

La partie tronconique arrière 25 s'étend sensiblement sur les deux tiers de la profondeur de la bague 1 mais sa longueur est variable. Elle est destinée à être reçue dans l'exemple de réalisation partiellement dans la partie cylindrique avant 27 du trou 11 et dans l'ouverture de poinçonnage 29 du trou 11 à l'arrière. Son profil est conique de diamètre externe croissant de l'avant à l'arrière, supérieur au diamètre du trou 11, depuis la partie cylindrique avant 27 jusqu'au niveau de l'ouverture de poinçonnage 29, en correspondance de position assemblée de la vis 13 et de la bague 1 sur la pièce support 9. Le diamètre de la partie 25 est supérieur au diamètre du trou 11 d'une valeur croissante progressive égale au maximum environ à la hauteur du filet 15 de vis plus le jeu fonctionnel, par exemple pour une vis M6 x 100 (∅ 6 mm, pas de filet de 1 mm), supérieur de 0,5 mm au total ou hauteur du filet plus 0,1 à 0,3 mm de jeu fonctionnel (0,6 à 0,8 mm) au diamètre du trou.

L'ensemble des parties 23 et 25 constitue le corps 3.

Cette augmentation du diamètre et donc de l'épaisseur détermine la conicité de la partie tronconique arrière 25, laquelle peut être interrompue un peu avant l'extrémité arrière par une partie cylindrique axiale droite 35.

Cette partie tronconique arrière 25 est destinée à s'écraser sur le filetage 15 de la vis 13 au serrage de cette dernière par son écrou 33 sur la pièce support 9, la matière plastique pénétrant dans les filets 15 de la vis 13 et sautant d'un filet 15 à l'autre, tandis que la vis 13 est serrée par son écrou 33. Cet écrasement de matière solidarise la vis 13 à la bague 1, laquelle s'applique de façon adhérente sur l'alésage du trou 11 et selon un couple de coincement dans le trou 11 supérieur à celui du serrage de la vis 13 par son écrou 33. Ainsi, la vis 13 est maintenue solidairement à la pièce support 9 au cours du serrage et il n'est pas nécessaire de maintenir la tête 37 de la vis 13 au cours du serrage.

Le fonctionnement est à présent décrit en liaison avec les figures 3 et 4. Il est très simple. Il s'agit de monter la bague 1 sur la vis 13, puis de monter la vis 13 avec la bague 1 dans le trou 11 de la pièce support 9, puis de visser l'écrou 33 de la vis 13 contre la pièce support 9. La bague 1 rentre dans le trou 11 au serrage, d'abord par sa partie de centrage avant 23, puis par sa partie tronconique arrière 25, s'écrasant au fur et à mesure du serrage, ainsi que précité, sur le filetage 15 de la vis 13. La vis 13 est alors solidarisée à la pièce support 9 et ne tourne pas. On serre la vis 13 jusqu'à fond de course, jusqu'au contact de la tête de vis 37 avec la pièce support 9. L'assemblage est alors réalisé, tel que représenté sur la figure 4. La bague 1 remplit en outre le trou 11 avec étanchéité.

En outre, le fonctionnement est réversible après desserrage de la vis.

Naturellement, l'invention n'est pas limitée à l'exemple de réalisation décrit et la bague peut comporter toute modification de forme et de matière accessible à l'homme du métier.

## Revendications

1. Bague (1) destinée à empêcher la rotation d'une vis (13) assemblée dans un trou (11) d'une pièce support (9), **caractérisée en ce qu'**elle comporte au moins une première partie cylindrique avant (23) de diamètre d'alésage équivalent au jeu près à celui du filetage (15) de la vis (13) et de diamètre externe équivalent ou légèrement supérieur au jeu près à celui du trou (11) de la pièce support (9), ladite première partie (23) favorisant le centrage de la bague (1) dans le trou (11) de la pièce support (9), et au moins une seconde partie tronconique arrière (25) adjacente à la partie cylindrique avant (23), ladite deuxième partie (25) étant en matière semi-rigide déformable et de diamètre d'alésage équivalent au jeu près à celui du filetage (15) de la vis (13) et en continuité de l'alésage de la partie cylindrique avant (23), ladite deuxième partie (25) étant de diamètre externe croissant, respectivement de celui ou proche de la partie cylindrique avant (23), du côté de celle-ci, à un diamètre à l'extrémité arrière égal sensiblement au plus au diamètre du trou (11) de la pièce support (9), à sa position assemblée, plus la hauteur du filet (15) de la vis (13) plus le jeu fonctionnel d'assemblage, au moins ladite seconde partie tronconique (25) étant pourvue sur son alésage interne de nervures (17) ou godrons destinés à venir s'écraser sur le filet (15) de la vis (13) au serrage de cette dernière (13) sur sa pièce support (9).

2. Bague selon la revendication 1, **caractérisée en ce qu'**elle est formée en une seule pièce issue de moulage en matière plastique déformable ou alliage de métal déformable.

3. Bague selon la revendication 1 ou 2, **caractérisée en ce que** lesdites nervures (17) sont formées sur la totalité de l'alésage (5) de la bague (1).

4. Bague selon l'une des revendications précédentes, **caractérisée en ce que** les nervures (17) de l'alésage interne (5) de la bague (1) sont formées de façon régulière sur la périphérie, parallèlement à l'axe de symétrie de rotation de la bague (1).

5. Bague selon l'une des revendications précédentes, **caractérisée en ce que** chacune desdites nervures (17) comporte une partie en saillie (19) arrondie selon une portion de cercle.

6. Bague selon l'une des revendications précédentes, **caractérisée en ce que** les nervures (17) comportent des parties en creux (21) ayant la forme d'un léger plat.

7. Bague selon la revendication 6, **caractérisée en ce que** lesdites parties en creux (21) et lesdites parties en saillie (19) des nervures (17) sont inscrites respectivement dans deux cercles coaxiaux à la bague.

8. Bague selon l'une des revendications précédentes, **caractérisée en ce que** la longueur de la partie cylindrique (23) est variable et de même la longueur de la partie tronconique (25) est variable.

9. Bague selon l'une des revendications précédentes, **caractérisée en ce que** l'extrémité avant (31) de la partie cylindrique avant (23) est chanfreinée.

10. Bague selon l'une des revendications précédentes, **caractérisée en ce que** le profil de section de la partie tronconique (25) est variable.

11. Bague selon l'une des revendications précédentes, **caractérisée en ce qu'**elle (1) comporte un axe de symétrie axial.

12. Assemblage d'une pièce support (9) et d'une vis (13) dans un trou complémentaire (11) de la pièce support (9) au jeu près, **caractérisé en ce qu'**il met en oeuvre une bague (1) selon l'une des revendications 1 à 11.
